# EUROPEAN PATENT APPLICATION

(11) **EP 4 625 838 A1**
(43) Date of publication of application: **01.10.2025**
(21) Application number: 23912571.9
(22) Date of filing: 15.11.2023
(51) Int. Cl.: H04B 7/06, H04B 7/0404, H04W 72/04, H04W 72/231, H04W 72/232, H04L 5/00, H04W 88/06

(54) **ELECTRONIC DEVICE COMPRISING ANTENNA AND METHOD THEREOF**

(30) Priority: 31.12.2022 KR 20220191332; 19.01.2023 KR 20230008341
(71) Applicant: Samsung Electronics Co., Ltd., Suwon-si, Gyeonggi-do 16677 (KR)
(72) Inventor: KIM, Seunghwan, Suwon-si Gyeonggi-do 16677 (KR); JEON, Minhwan, Suwon-si Gyeonggi-do 16677 (KR); CHO, Youngsang, Suwon-si Gyeonggi-do 16677 (KR); CHOI, Seungki, Suwon-si Gyeonggi-do 16677 (KR)
(74) Representative: Gulde & Partner
(86) International application number: PCT/KR2023/018405
(87) International publication number: WO 2024/143895

(57) **Abstract**

Provided according to embodiments is an electronic device. The electronic device may comprise: a first antenna; a second antenna; a third antenna; a fourth antenna; a first wireless communication module electrically connected to the first antenna and the second antenna; a second wireless communication module electrically connected to the third antenna and the fourth antenna; a radio frequency (RF) transceiver electrically connected to the first wireless communication module and the second wireless communication module; and a processor. The processor may be configured to configure the RF transceiver such that a signal in a first frequency band is transmitted through the first wireless communication module and a signal in a second frequency band is transmitted through the second wireless communication module.

## Description

### [Technical Field]

The following descriptions relate to an electronic device comprising an antenna and a method thereof.

### [Background Art]

In a wireless access network, an electronic device may transmit sounding reference signals (SRSs) to a base station. SRS switching technology is a technology that enables the SRSs to be transmitted to the base station through a plurality of antennas mounted on the electronic device. The base station may estimate a downlink channel based on the received SRSs. The base station may perform precoding or beamforming on downlink data based on the estimated downlink channel. Accordingly, a data throughput may increase.

The above-described information may be provided as a related art for the purpose of helping understanding of the present disclosure. No claim or determination is raised as to whether any of the above-described descriptions may be applied as a prior art related to the present disclosure.

### [Disclosure]

### [Technical Solution]

An electronic device according to embodiments is provided. The electronic device may comprise a first antenna, a second antenna, a third antenna, a fourth antenna, a first wireless communication module electrically connected to the first antenna and the second antenna, a second wireless communication module electrically connected to the third antenna and the fourth antenna, a radio frequency (RF) transceiver electrically connected to the first wireless communication module and the second wireless communication module, and a processor. The processor may be configured to set the RF transceiver such that a signal in a first frequency band is transmitted through the first wireless communication module and a signal in a second frequency band is transmitted through the second wireless communication module. The processor may be configured to transmit, through the first wireless communication module, a first sounding reference signal of the first frequency band or a second SRS of the first frequency band. The processor may be configured to transmit a third SRS of the first frequency band through the second wireless communication module based on transmit (TX) chain switching during a time interval allocated for transmitting the third SRS. The processor may be configured to transmit a fourth SRS of the first frequency band through the second wireless communication module based on TX chain switching during a time interval allocated for transmitting the fourth SRS.

A method performed by an electronic device according to embodiments is provided. The method may comprise setting the electronic device such that a signal in a first frequency band is transmitted through a first wireless communication module that is electrically connected to a first antenna and a second antenna, and a signal in a second frequency band is transmitted through a second wireless communication module that is electrically connected to a third antenna and a fourth antenna. The method may comprise transmitting, through the first wireless communication module, a first sounding reference signal (SRS) of the first frequency band or a second SRS of the first frequency band. The method may comprise, during a time interval for transmitting a third SRS of the first frequency band, transmitting the third SRS of the first frequency band through the second wireless communication module, based on transmit (TX) chain switching. The method may comprise, during a time interval for transmitting a fourth SRS of the first frequency band, transmitting the fourth SRS of the first frequency band through the second wireless communication module, based on TX chain switching.

In embodiments, a non-transitory computer-readable storage medium is provided. The non-transitory computer-readable storage medium may comprise memory storing instructions. The instructions, when executed by a processor, may cause an electronic device to set the electronic device such that a signal in a first frequency band is transmitted through a first wireless communication module that is electrically connected to a first antenna and a second antenna, and a signal in a second frequency band is transmitted through a second wireless communication module that is electrically connected to a third antenna and a fourth antenna, transmit, through the first wireless communication module, a first sounding reference signal (SRS) of the first frequency band or a second SRS of the first frequency band, during a time interval for transmitting a third SRS of the first frequency band, transmit the third SRS of the first frequency band through the second wireless communication module, based on transmit (TX) chain switching, and, during a time interval for transmitting a fourth SRS of the first frequency band, transmit the fourth SRS of the first frequency band through the second wireless communication module, based on TX chain switching.

In embodiments, a non-transitory computer-readable storage medium is provided. The non-transitory computer-readable storage medium may comprise memory storing instructions. The instructions, when executed by a processor, may cause an electronic device to set the electronic device such that a signal in a first frequency band is transmitted through a first wireless communication module that is electrically connected to a first antenna and a second antenna, and a signal in a second frequency band is transmitted through a second wireless communication module that is electrically connected to a third antenna and a fourth antenna, transmit, through the first wireless communication module, a first sounding reference signal (SRS) of the first frequency band or a second SRS of the first frequency band, during a time interval for transmitting a third SRS of the first frequency band, transmit the third SRS of the first frequency band through the second wireless communication module, based on transmit (TX) chain switching, and, during a time interval for transmitting a fourth SRS of the first frequency band, transmit the fourth SRS of the first frequency band through the second wireless communication module, based on TX chain switching.

### [Description of the Drawings]

FIG. 1 is a block diagram of an electronic device in a network environment, according to various embodiments.
FIG. 2 is a block diagram of an electronic device for supporting legacy network communication and 5th generation (5G) network communication, according to various embodiments.
FIG. 3 illustrates an example of signaling between an electronic device and a network node for downlink data transmission using sounding reference signals (SRSs), according to various embodiments.
FIG. 4 illustrates an example of a radio frequency front end (RFFE) structure for transmit (TX) chain switching, according to various embodiments.
FIG. 5 illustrates an example of SRS transmission based on a RFFE for TX chain switching, according to various embodiments.
FIG. 6 illustrates an operation flow of an electronic device for transmitting SRSs, based on a RFFE for TX chain switching, according to various embodiments.
FIG. 7 illustrates an operation flow of an electronic device for performing TX chain switching, according to various embodiments.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., a signal, information, a message, or signaling), a term referring to a resource (e.g., a symbol, a slot, a subframe, a radio frame, or a frame), a term for a calculation state (e.g., a step, a sequence, an operation, or a procedure), a term referring to data (e.g., a signal, a sequence, a sounding reference signal (SRS), a packet, data, information, bit, symbol, or information element (IE)), a term referring to a channel, a term referring to a network object, a term referring to a component of a device, and the like, that are used in the following description, are exemplified for convenience of explanation. Therefore, the present disclosure is not limited to terms described below, and another term having an equivalent technical meaning may be used.

A term referring to a component of an electronic device (e.g., a communication module, or a wireless communication module), a term referring to a RF-related module (a front end module (FEM), a power amplifier module (PAM), a FEM including duplexer (FEMid), a power amplifier module including duplexer (PAMid), a Low noise amplifier PAM inclduing duplexder (LPAMid), a radio frequency front end (RFFE), or a radio frequency integrated circuit (RFIC)), a term referring to an antenna (e.g., an antenna, a radiator, an antenna radiator, an antenna end, or an antenna element), a term referring to circuitry (e.g., a PCB, a FPCB, a signal line, or a feeding line, a data line, an electrical connection, wireless communication circuitry, or communication circuitry), and the like, that are used in the following description, are exemplified for convenience of explanation. Therefore, the present disclosure is not limited to terms to be described below, and another term having an equivalent technical meaning may be used. In addition, a term such as '...unit, '...device, '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

This disclosure describes various embodiments using terms used in a portion of communication standards (e.g., 3rd Generation Partnership (3GPP)), but this is only an example for explanation. Various embodiments of the present disclosure may be easily modified and applied in another communication system.

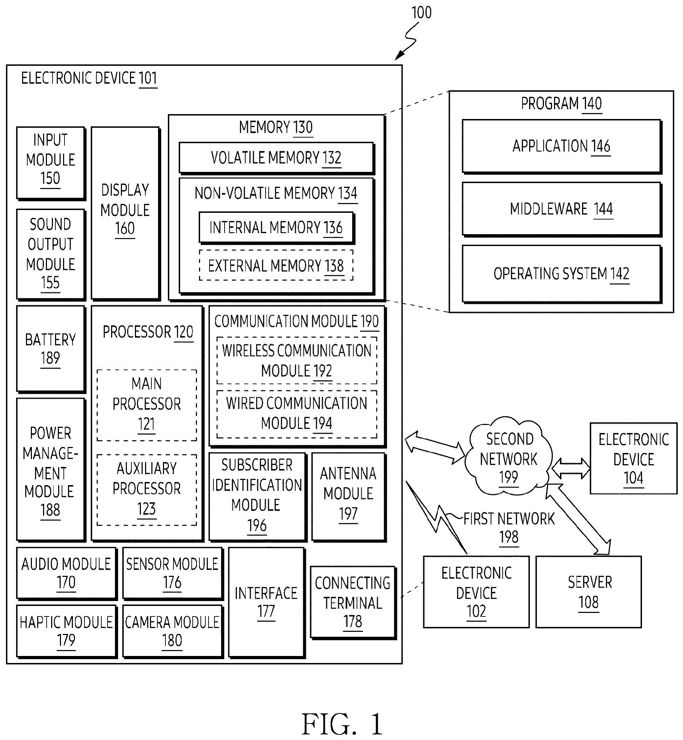

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

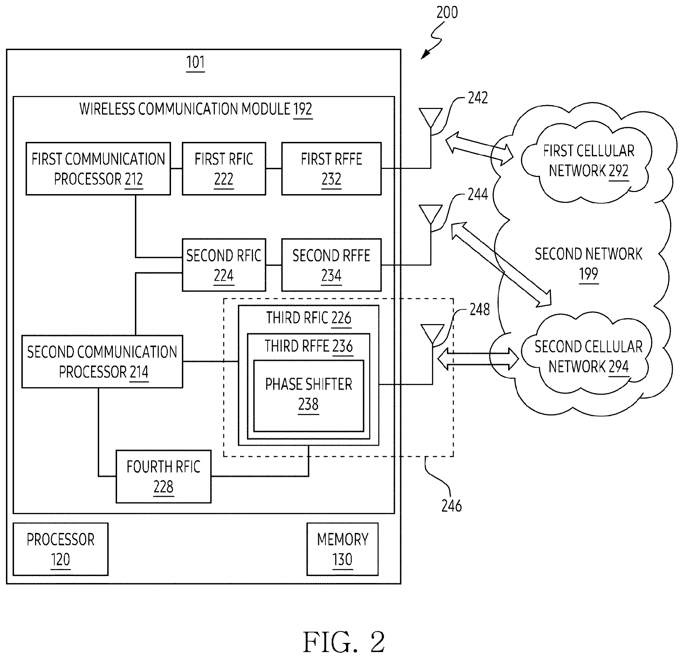

FIG. 2 illustrates an electronic device 101 for supporting legacy network communication and 5G network communication according to an embodiment. Referring to FIG. 2, the electronic device 101 may further include a first communication processor 212, a second communication processor 214, a first RFIC 222, a second RFIC 224, a third RFIC 226, a fourth RFIC 228, a first radio frequency front end (RFFE) 232, a second RFFE 234, a first antenna module 242, a second antenna module 244, and an antenna 248. The electronic device 101 may further include a processor 120 and a memory 130. The network 199 may include a first network 292 and a second network 294. The electronic device 101 may further include at least one of the components shown in FIG. 1, and the network 199 may further include at least another network. The first communication processor 212, the second communication processor 214, the first RFIC 222, the second RFIC 224, the fourth RFIC 228, the first RFFE 232, and the second RFFE 234 may constitute at least a part of the wireless communication module 192. The fourth RFIC 228 may be omitted, or may be included as a part of the third RFIC 226.

The first communication processor 212 may establish a communication channel in a band to be used for wireless communication with a first network 292, and may support legacy network communication through the established communication channel. The first network may be a legacy network including a second generation (2G), third generation (3G), fourth generation (4G), or long-term evolution (LTE) network.The second communication processor 214 may establish a communication channel corresponding to a designated band (e.g. from about 6 GHz to about 60 GHz) among bands to be used for wireless communication with a second network 294, and may support 5G network communication through the established communication channel. The second network 294 may be a 5G network defined in the third generation partnership project (3GPP). Additionally, the first communication processor 212 or the second communication processor 214 may establish a communication channel corresponding to another designated band (e.g. about 6 GHz or less) among bands to be used for wireless communication with the second network 294, and may support 5G network communication through the established communication channel. The first communication processor 212 and the second communication processor 214 may be implemented in a single chip or a single package together with the processor 120, the auxiliary processor 123, or the communication module 190.

At the time of signal transmission, the first RFIC 222 may convert a baseband signal generated by the first communication processor 212 into a radio-frequency (RF) signal of about 700 megahertz (MHz) to about 3 GHz used for the first network 292 (e.g. a legacy network). At the time of signal reception, the RF signal may be acquired from the first network 292 (e.g. a legacy network) through an antenna (e.g. the first antenna module 242), and may be preprocessed through RFFE (e.g. the first RFFE 232). The first RFIC 222 may convert the preprocessed RF signal into a baseband signal which can be processed by the first communication processor 212.

At the time of signal transmission, the second RFIC 224 may convert a baseband signal generated by the first communication processor 212 or the second communication processor 214 into an RF signal (hereinafter, a 5G Sub6 RF signal) of a Sub6 band (e.g. about 6 GHz or less) used for the second network 294 (e.g. a 5G network). At the time of signal reception, the 5G Sub6 RF signal may be acquired from the second network 294 (e.g. a 5G network) through an antenna (e.g. the second antenna module 244), and may be preprocessed through RFFE (e.g. the second RFFE 234). The second RFIC 224 may convert the preprocessed 5G Sub6 RF signal into a baseband signal which can be processed by a corresponding communication processor among the first communication processor 212 and the second communication processor 214.

The third RFIC 226 may convert a baseband signal generated by the second communication processor 214 into an RF signal (hereinafter, a 5G Above6 RF signal) of a 5G Above6 band (e.g. from about 6 GHz to about 60 GHz) to be used in the second network 294 (e.g. a 5G network). At the time of signal reception, the 5G Above6 RF signal may be acquired from the second network 294 (e.g. a 5G network) through an antenna (e.g. the antenna 248), and may be preprocessed through the third RFFE 236. The third RFIC 226 may convert the preprocessed 5G Above6 RF signal into a baseband signal that can be processed by the second communication processor 214. The third RFFE 236 may be configured as a part of the third RFIC 226.

The electronic device 101 may include the fourth RFIC 228 separately from the third RFIC 226 or as at least a part thereof. In this instance, the fourth RFIC 228 may convert a baseband signal generated by the second communication processor 214 into an RF signal (hereinafter, an intermediate-frequency (IF) signal) of an intermediate frequency band (e.g. from about 9 GHz to about 11 GHz) and may then transmit the IF signal to the third RFIC 226. The third RFIC 226 may convert the IF signal into a 5G Above6 RF signal. At the time of signal reception, the 5G Above6 RF signal may be received from the second network 294 (e.g. a 5G network) through an antenna (e.g. the antenna 248) and may be converted into an IF signal by the third RFIC 226. The fourth RFIC 228 may convert the IF signal into a baseband signal that can be processed by the second communication processor 214.

The first RFIC 222 and second RFIC 224 may be implemented as at least a part of a single package or a single chip. The first RFFE 232 and the second RFFE 234 may be implemented as at least a part of a single package or a single chip. At least one antenna module of the first antenna module 242 or the second antenna module 244 may be omitted, or may be combined with the other antenna module to process RF signals of multiple bands corresponding thereto.

The third RFIC 226 and antenna 248 may be arranged on the same substrate to constitute a third antenna module 246. For example, the wireless communication module 192 or the processor 120 may be arranged on a first substrate (e.g. a main PCB). In this instance, the third antenna module 246 may be configured by arranging the third RFIC 226 in a partial area (e.g. a lower surface) of a second substrate (e.g. a sub PCB) independent of the first substrate and arranging the antenna 248 in another partial area (e.g. an upper surface) thereof. Arranging the third RFIC 226 and the antenna 248 on the same substrate can reduce the length of a transmission line therebetween, and may reduce the loss (e.g. attenuation) of a signal in a high-frequency band (e.g. about 6GH - about 60 GHz), used for 5G network communication, by a transmission line. Therefore, the electronic device 101 may exhibit an enhanced quality or speed of communication with the second network 294 (e.g. a 5G network). The antenna 248 may be configured as an antenna array including multiple antenna elements which can be used for beamforming. In this instance, the third RFIC 226 may include, as a part of the third RFFE 236, multiple phase shifters 238 corresponding to the multiple antenna elements. At the time of signal transmission, the multiple phase shifters 238 may shift the phases of 5G Above6 RF signals to be transmitted from the electronic device 101 to an external device (e.g. a base station of a 5G network) through antenna elements corresponding thereto. At the time of signal reception, the multiple phase shifters 238 may shift the phases of 5G Above6 RF signals received from the outside through antenna elements corresponding thereto into an identical or substantially identical phase, thus enabling the transmission or reception through beamforming between the electronic device 101 and the outside.

The second network 294 (e.g. a 5G network) may be operated independently of the first network 292 (e.g. a legacy network) (e.g. stand-alone (SA)) or may be operated while being connected to the first network (e.g. non-standalone (NSA)). For example, the 5G network may include only an access network (e.g. a 5G radio access network (RAN) or next-generation RAN (NG RAN)) and may not include a core network (e.g. a next-generation core (NGC)). In this instance, the electronic device 101 may access an access network of a 5G network and may then access an external network (e.g. Internet) under the control of a core network (e.g. an evolved packed core (EPC) network) of a legacy network. Protocol information (e.g. LTE protocol information) for communication with the legacy network or protocol information (e.g. new radio (NR) protocol information) for communication with the 5G network are stored in a memory 230, and may be accessed by another component (e.g. the processor 120, the first communication processor 212, or the second communication processor 214).

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

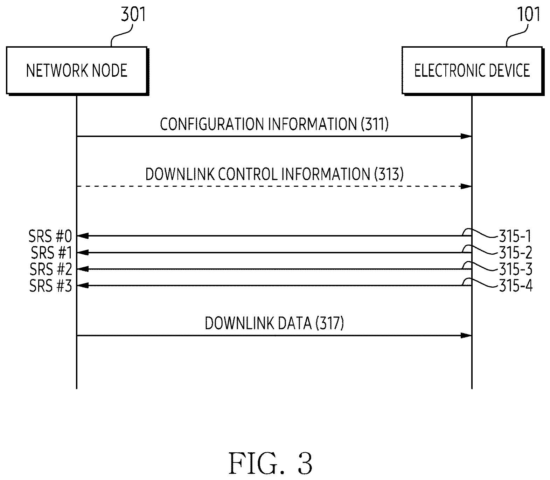

FIG. 3 illustrates an example of signaling between an electronic device (e.g., the electronic device 101) and a network node (e.g., a base station of the second network 199 or a radio unit (RU) node of the base station) for downlink data transmission using sounding reference signals (SRSs), according to various embodiments.

Referring to FIG. 3, the electronic device 101 may perform communication with a network node 301. The electronic device 101 may transmit or receive a signal in a 5G new radio (NR) frequency band. The network node 301 may provide a 5G NR cell.

In operation 311, the network node 301 may transmit configuration information to the electronic device 101. For example, the network node 301 may transmit the configuration information to the electronic device 101 through a radio resource control (RRC) message. The electronic device 101 may receive the configuration information through the RRC message. The configuration information may include an SRS configuration. The SRS configuration may include information (e.g., time resource information, frequency resource information, information on a transmission scheme (e.g., periodic transmission/aperiodic transmission), hopping information, usage information, or port information) related to SRSs to be transmitted from the electronic device 101.

According to an embodiment, the SRS configuration may include information for SRS resources. As an example, the SRS configuration may correspond to an 'SRS-Config' information element (IE) defined in a 3GPP standard. For example, the SRS configuration may include SRS resources for 1T4R. The SRS configuration may include information for one or more SRS resource sets (e.g., SRS resource set IE of the 3GPP) including the SRS resources. The information for the one or more SRS resource sets may include information (e.g., a time-frequency resource location) for each of a plurality of SRS resources (e.g., four SRS resources) and usage information for the SRS resources. The usage information may indicate one of beam management, a codebook, a non-codebook, and antenna switching.

According to an embodiment, the usage information may indicate that the plurality of SRS resources are used as the antenna switching. For example, for the 1T4R, the four SRS resources may be configured with two SRS resource sets. For example, a first SRS resource set may include two SRS resources, and a second SRS resource set may include two other SRS resources. In addition, as another example, the first SRS resource set may include three SRS resources, and the second SRS resource set may include one SRS resource. Herein, the usage information indicated by each of the first SRS resource set and the second SRS resource set may indicate the antenna switching.

In operation 313, the network node 301 may transmit downlink control information (DCI) to the electronic device 101. For example, the downlink control information may include resource allocation information for uplink transmission. The downlink control information may include information for instructing the electronic device 101 to transmit SRSs. For example, the downlink control information may indicate configuration information (e.g., the SRS resource set) for the SRSs to be transmitted by the electronic device 101. Although an operation of transmitting downlink control information once is described in FIG. 3, embodiments of the present invention are not limited thereto. For example, according to a scheduling result of the SRSs, the electronic device 101 may receive downlink control information twice or three or more times. For example, the electronic device 101 may receive downlink control information for a first SRS and a second SRS among SRSs for the 1T4R to be described later, and may separately receive downlink control information for a third SRS and a fourth SRS. In addition, in FIG. 3, an example of triggering SRS transmission through the downlink control information is illustrated, but the embodiments of the present disclosure are not limited to thereto. For example, in case of semi-persistent SRS transmission or periodic SRS transmission, the operation 313 may be omitted.

In operation 315, the electronic device 101 may transmit sounding reference signals (SRSs) to the network node 301. The electronic device 101 may transmit the SRSs based on the configuration information. The electronic device 101 may transmit the SRSs based on the downlink control information. The configuration information and/or the downlink control information may include information for an SRS resource set. The SRS resource set may include information for SRS resources for the 1T4R. The 1T4R means one transmit (TX) antenna and four receive (RX) antennas, and the electronic device 101 requires at least four SRS resources for the 1T4R. Herein, the SRS resource refers to a location of a time-frequency resource within a resource grid in which the SRS is transmitted. The electronic device 101 may transmit SRSs based on the SRS resources for the 1T4R. The SRSs are transmitted through an uplink channel. Although not illustrated in FIG. 3, the network node 301 may estimate a downlink channel based on the received SRSs.

The electronic device 101 may transmit SRSs based on antenna switching for the four SRS resources. The antenna switching, that is, transmission path changing between antennas, may be performed to enable the network node 301 to infer a downlink propagation channel toward each UE receiving antenna. The electronic device 101 may transmit an SRS through one TX antenna in one time interval (e.g., a slot). The electronic device 101 may change a transmission antenna through the antenna switching. For example, the operation 315 may include operation 315-1, operation 315-2, operation 315-3, and operation 315-4. In the operation 315-1, the electronic device 101 may transmit the first SRS (i.e., SRS #0) for the 1T4R. For example, the electronic device 101 may transmit the first SRS through a first antenna. In the operation 315-2, the electronic device 101 may transmit the second SRS (i.e., SRS #1) for the 1T4R. For example, the electronic device 101 may change an antenna connected to the SRS transmission path from the first antenna to a second antenna. The electronic device 101 may transmit the second SRS through the second antenna. In the operation 315-3, the electronic device 101 may transmit the third SRS (i.e., SRS #2) for the 1T4R. For example, the electronic device 101 may change the antenna connected to the SRS transmission path from the second antenna to a third antenna. The electronic device 101 may transmit the third SRS through the third antenna. In the operation 315-4, the electronic device 101 may transmit the fourth SRS (i.e., SRS #3) for the 1T4R. For example, the electronic device 101 may change the antenna connected to the SRS transmission path from the third antenna to a fourth antenna. The electronic device 101 may transmit the fourth SRS through the fourth antenna.

In operation 317, the network node 301 may transmit downlink data. The network node 301 may estimate a downlink channel based on the received SRSs. For example, the network node 301 may estimate the downlink channel through channel reciprocity for the received SRSs (e.g., SRS #0, SRS #1, SRS #2, and SRS #3). Hereinafter, in order to describe operations for the SRSs, a time division duplex (TDD) band in which use of the channel reciprocity is possible is illustrated, but the embodiments of the present disclosure are not limited thereto. Downlink channel estimation through calibration of an uplink channel in a frequency division duplex (FDD) band may also be understood as a category of the present disclosure. The network node 301 may perform precoding (e.g., digital beamforming) or beamforming (e.g., analog beamforming) based on the estimated downlink channel. The network node 301 may apply a precoding matrix or apply a beamforming weight to the downlink data to be transmitted.

Although not illustrated in FIG. 3, the electronic device 101 may transmit a message including user equipment (UE) capability information to the network node 301 in order to inform that the antenna switching is possible. For example, the UE capability information may include switch information (e.g., 'SRS-Tx Switch' IE' of the 3GPP) for indicating the number of reception paths for each transmission path. For example, the switch information may indicate the 1T4R.

In Evolved universal terrestrial radio access-New radio dual-connectivity (EN-DC), the electronic device 101 may connect to each of an LTE base station and a NR base station. The electronic device 101 may transmit a signal of an NR frequency band (hereinafter, referred to as an NR signal) while transmitting a signal of a long term evolution (LTE) frequency band (hereinafter, referred to as an LTE signal). In order to transmit both the LTE signal and the NR signal, the electronic device 101 may include two communication modules. The electronic device 101 may generate the LTE signal through one communication module and generate the NR signal through another communication module.

In an EN-DC mode, the communication module (hereinafter, referred to as a first wireless communication module) for generating the NR signal may be allocated as a SRS port #0 (e.g., an antenna port 1000 of the 3GPP). The communication module (hereinafter, referred to as a second wireless communication module) for generating the LTE signal may be allocated as an LTE TX resource. Due to a structure of the electronic device 101, an antenna for transmitting the LTE signal may be used as an antenna for transmitting the NR signal. For example, in case that four SRS resources for transmitting NR SRSs are configured for the 1T4R, one of four antennas of the electronic device 101 may be used as the antenna for transmitting the LTE signal. If the first wireless communication module is connected to each of the four antennas for transmitting the SRSs, the electronic device 101 may include a separate device (e.g., an RF switch or a diplexer) for antenna switching for the four antennas or for simultaneous transmission of the LTE signal and the NR signal (e.g., SRS). The separate device being mounted in the electronic device 101 not only lowers space efficiency of the electronic device 101 but also increases insertion loss due to a disposition of the separate device. In addition, the increase in the insertion loss may lower a transmission gain and cause an increase in current consumption.

Various embodiments of the present disclosure describe a RFFE structure of an electronic device for transmitting sounding reference signals (SRSs). In addition, a technique for transmitting the SRSs through transmission (TX) chain switching within the RFFE structure is described. Various embodiments of the present disclosure describe a situation in which the electronic device 101 transmits the SRSs in 5G NSA communication, that is, an EN-DC environment, but the embodiments of the present disclosure are not limited thereto. For the electronic device in which antenna switching according to the 1T4R is performed in one frequency band and an uplink signal is transmitted in another frequency band, the RFFE structure according to various embodiments of the present disclosure may be applied. For example, the RFFE structure according to various embodiments of the present disclosure may be configured for the electronic device 101 for UL (uplink) carrier aggregation (CA). In addition, for example, the RFFE structure according to various embodiments of the present disclosure may also be applied to another type of DC (e.g., New radio-Evolved universal terrestrial radio access dual-connectivity (NE-DC), or NG-RAN Evolved universal terrestrial radio access-New radio dual-connectivity (NGEN-DC)).

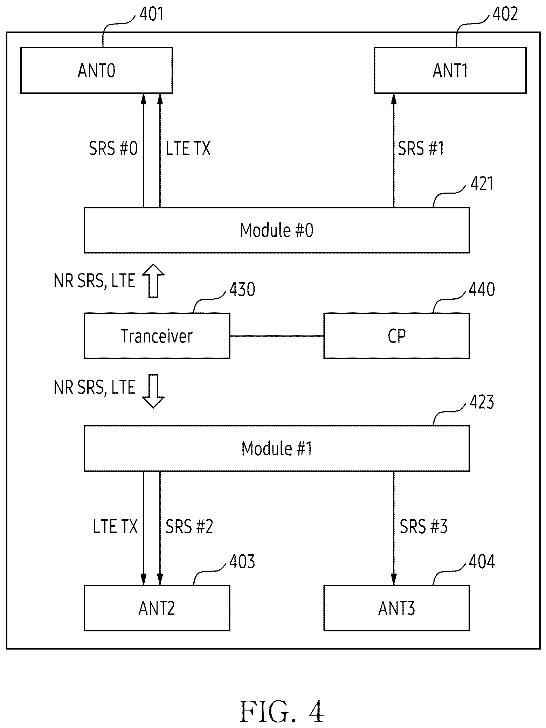

FIG. 4 illustrates an example of a radio frequency front end (RFFE) structure for transmit (TX) chain switching, according to various embodiments. A path from a processor (e.g., the processor 120) and an RF transceiver (e.g., RFIC), through a communication module (e.g., FEM, PAM, FEMid, PAMid, or LPAMid), to an individual antenna (e.g., an antenna radiator) may be referred to as a transmission chain. Therefore, changing the wireless communication module or changing the path from the wireless communication module to the antenna radiator may be referred to as the TX chain switching. In various embodiments of the present disclosure, the TX chain switching may be performed for SRS transmission. By adaptively mapping two TX resources of a terminal to the two communication modules, a structure from the communication module to the antenna, that is, the RFFE structure, may be simplified.

Referring to FIG. 4, an electronic device 101 may include a plurality of antennas (e.g., a first antenna 401 (ANT #0), a second antenna 402 (ANT #1), a third antenna 403 (ANT #2), and a fourth antenna 404 (ANT #3)). The electronic device 101 may use the plurality of antennas based on SRS resources configured with 1T4R. In the electronic device 101, the first antenna 401, the second antenna 402, the third antenna 403, and the fourth antenna 404 may be used for the SRS transmission through antenna switching among the plurality of antennas. For transmission for the 1T4R, one of the first antenna 401, the second antenna 402, the third antenna 403, and the fourth antenna 404 may be used in one time interval. For reception for the 1T4R, the first antenna 401, the second antenna 402, the third antenna 403, and the fourth antenna 404 may all be used in one time interval.

The electronic device 101 may include a first wireless communication module 421 (Module #0) and a second wireless communication module 423 (Module #1). In various embodiments of the present disclosure, a communication module (e.g., the first wireless communication module 421 or the second wireless communication module 423) may be a communication component including a transmission path and/or a reception path between the plurality of antennas and a RF transceiver 430 described below. For example, the wireless communication module may include an LPAMid. The LPAMid may be a complex module including a low noise amplifier (LNA), a switch (or a filter), and a power amplifier (PA). Also, for example, the wireless communication module may include a PAMid. The PAMid may be a complex module including a power amplifier and a switch. In addition, for example, the wireless communication module may include FEMid. The FEMid may be a complex module including a switch (or a filter or a duplexer) and an antenna switch instead of a power amplifier LNA, at a front end. In addition, for example, the wireless communication module may include a power amplifier module (PAM). The PAM may be a module including a power amplifier.

The first wireless communication module 421 may be electrically connected to the first antenna 401 and the second antenna 402. Although not illustrated in FIG. 4, a switch for selecting one of the first antenna 401 and the second antenna 402 may be disposed in the electronic device 101. For example, the switch may be disposed in the first wireless communication module 421. For another example, the switch may be disposed outside the first wireless communication module 421. The second wireless communication module 423 may be electrically connected to the third antenna 403 and the fourth antenna 404. Although not illustrated in FIG. 4, a switch for selecting one of the third antenna 403 and the fourth antenna 404 may be disposed in the electronic device 101. For example, the switch may be disposed in the second wireless communication module 423. For another example, the switch may be disposed outside the second wireless communication module 422.

The electronic device 101 may manage two transmission resources. The electronic device 101 may transmit two uplink signals based on the first wireless communication module 421 and the second wireless communication module 423. The electronic device 101 may transmit a first uplink signal through the first wireless communication module 421. The first uplink signal may be a signal of a first frequency band. For example, the first frequency band may be a frequency band supporting a NR communication system (e.g., N41 frequency band, TDD, 2496-2690 MHz). The electronic device 101 may transmit a second uplink signal through the second wireless communication module 423. For example, the second frequency band may be a frequency band supporting an LTE communication system (e.g., B3 frequency band, FDD, UL: 1710-1785 MHz, DL: 1805-1880 MHz).

The electronic device 101 may include the RF transceiver 430. The RF transceiver 430 may up-convert a baseband signal into an RF band signal or down-convert an RF band signal into a baseband signal. For example, the RF transceiver 430 may supply an RF signal (e.g., an SRS) to an antenna port (e.g., an SRS port) allocated from a CP 440. The RF transceiver 430 may include a mixer and an oscillator. The RF transceiver 430 may include a digital-to-analog converter (DAC) for converting a digital signal into an analog signal. The RF transceiver 430 may include an analog-to-digital converter (ADC) for converting an analog signal into a digital signal. The RF transceiver 430 may include a plurality of transmission/reception paths. For example, the RF transceiver 430 may include the RFIC.

The electronic device 101 may include the CP 440. The CP 440 may control overall operations for performing communication. The CP 440 may perform functions of a protocol stack required by a communication standard. For example, the CP 440 may generate SRSs for the 1T4R. For example, the CP 440 may control the first wireless communication module 421, the second wireless communication module 423, and the RF transceiver 430 to transmit an SRS corresponding to an SRS resource in a time interval determined according to the SRS resource. For example, the CP 440 may determine a condition of the TX chain switching of the present disclosure and set transmission paths (e.g., the first wireless communication module 421, the second wireless communication module 423, and the RF transceiver 430).

According to an embodiment, the electronic device 101 may transmit a signal in an LTE frequency band, that is, an LTE signal. The electronic device 101 may allocate a TX resource for the LTE frequency band to the second wireless communication module 423. A baseband signal generated by the CP 440 may be converted into an RF band signal in the RF transceiver 430. The electronic device 101 may transmit the RF band signal to another electronic device (e.g., the network node 301, the base station, and the RU of FIG. 3) through the RF transceiver 430, the second wireless communication module 423, and the third antenna 403.

According to an embodiment, the electronic device 101 may transmit a signal of an NR frequency band, that is, an NR signal. The NR signal may include SRSs. For example, four SRS resources for the 1T4R may be configured in the electronic device 101. The four resources may include a first SRS resource, a second SRS resource, a third SRS resource, and a fourth SRS resource. The first SRS resource may be associated with the first antenna 401. The second SRS resource may be associated with the second antenna 402. The third SRS resource may be associated with the third antenna 403. The fourth SRS resource may be associated with the fourth antenna 404.

The electronic device 101 may allocate the TX resource for the NR frequency band to the first wireless communication module 421 or the second wireless communication module 423. The first wireless communication module 421 may be electrically connected to the first antenna 401 and the second antenna 402. In the first SRS resource or the second SRS resource, the electronic device 101 may provide a baseband SRS sequence (e.g., a Zadoff Chu (ZC) sequence) to the first wireless communication module 421. The second wireless communication module 423 may be electrically connected to the third antenna 403 and the fourth antenna 404. In the third SRS resource or the fourth SRS resource, the electronic device 101 may provide the baseband SRS sequence to the second wireless communication module 423.

According to an embodiment, the electronic device 101 may set a wireless communication module based on an SRS resource set. For example, for the 1T4R, four SRS resources may be configured in the electronic device 101. Herein, the four SRS resources may be configured with two SRS resource sets. As an example, a first SRS resource set may include two SRS resources (e.g., the first SRS resource, and the second SRS resource), and a second SRS resource set may include two other SRS resources (e.g., the third SRS resource, and the fourth SRS resource). The electronic device 101 may establish a transmission path for LTE and a transmission path for NR by associating an identifier of the SRS resource set with a wireless communication module corresponding to the SRS resource set. For example, the electronic device 101 may allocate an identifier (hereinafter, a first SRS resource set ID) of the first SRS resource set to the first wireless communication module 421. The electronic device 101 may allocate an identifier (hereinafter, referred to as the second SRS resource set ID) of the second SRS resource set to the second wireless communication module 423.

According to an embodiment, when the electronic device 101 intends to transmit an SRS through the second wireless communication module 423, the electronic device 101 may perform the TX chain switching. If the second wireless communication module 423 is used for the SRS, the electronic device 101 may allocate the TX resource for the LTE frequency band to the first wireless communication module 421 through the TX chain switching. The baseband signal generated by the CP 440 may be converted into the RF band signal in the RF transceiver 430. The electronic device 101 may transmit the RF band signal to another electronic device (e.g., the network node 301, the base station, and the RU of FIG. 3) through the RF transceiver 430, the first wireless communication module 421, and the first antenna 401. Thereafter, when SRS transmission using the second wireless communication module 423 is terminated (e.g., termination of a corresponding slot period), the electronic device 101 may perform the TX chain switching again. The electronic device 101 may transmit an LTE signal to the other electronic device (e.g., the network node 301, the base station, and the RU of FIG. 3) through the RF transceiver 430, the second wireless communication module 423, and the third antenna 403.

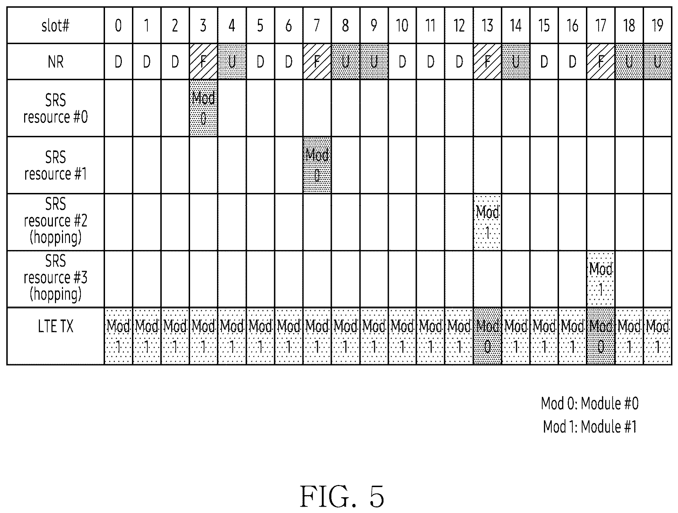

The TX chain switching using the RFFE structure according to embodiments of FIG. 4 may change a transmission chain available to the terminal, thereby reducing loss of a signal path due to antenna switching. If the TX chain switching is not performed, an RF component (e.g., an RF switch, or a filter) for branching paths from the communication module providing the SRS to the four antennas may be included in an RFFE of the electronic device 101. Accordingly, the electronic device 101 according to various embodiments of the present disclosure may include the RFFE having an efficient structure by simplifying an SRS transmission path and also separating a simultaneous transmission path of the SRS and the LTE, through the TX chain switching. Based on the communication module for the LTE frequency band being used for RS transmission of the NR frequency band, the electronic device 101 may perform the TX chain switching. Hereinafter, operations of the electronic device 101 for transmitting SRSs through the TX chain switching will be described with reference to FIG. 5.

FIG. 5 illustrates an example of SRS transmission based on a RFFE for TX chain switching, according to various embodiments. As described above in FIG. 3, an electronic device (e.g., the electronic device 101) may notify a network node 301 that the electronic device 101 supports SRS transmission according to 1T4R by transmitting a message including UE capability information to a base station (e.g., the network node 301). Thereafter, the electronic device 101 may receive an RRC message including SRS configuration information from the network node 301. Based on SRS resources included in the SRS configuration information and usage information set (e.g., 'usage' IE set to 'antenna switching' in a 3GPP NR standard) for the SRS resources, the electronic device 101 may identify that the SRS transmission according to the 1T4R is configured.

Referring to FIG. 5, the electronic device 101 may receive a frame configuration in a TDD frequency band (e.g., an N41 band). A frame may include a plurality of slots. Each slot may include 14 symbols. For example, a length of the frame may be 10 milliseconds (ms). The number of slots included in the frame may be changed according to a subcarrier spacing (SCS). For example, in case that the SCS is 15 kHz, one frame may be configured with 10 slots. In addition, for example, in case that the SCS is 30 kHz, one frame may be configured with 20 slots. In FIG. 5, the frame configuration is described in a resource structure in which the SCS is 30 kHz.

The frame configuration of the TDD band may include a DL-UL pattern indicating a relationship between a DL time resource for downlink communication and a UL time resource for uplink communication. The DL-UL pattern may indicate whether each slot is a DL time interval (D), a UL time interval (U), or a flexible interval (F) (or a special (S) interval) between the DL time interval and the UL time interval. For example, a fourth slot #3 of the frame may be the flexible slot. For example, 20 slots in the frame may have a structure of 'DDDFUDDFUUDDDFUDDFUU' according to the DL-UL pattern. Hereinafter, four SRS resources may be allocated to the flexible slot, and SRSs are transmitted in an order of a first SRS, a second SRS, a third SRS, and a fourth SRS will be described.

The electronic device 101 may receive scheduling information for the SRS transmission from the network node 301 through downlink control information (DCI) (e.g., the operation 313). The electronic device 101 may transmit an LTE signal through a second wireless communication module 423. While the LTE signal is transmitted, the electronic device 101 may transmit a first SRS. While the LTE signal is transmitted, the electronic device 101 may transmit a second SRS. The electronic device 101 may transmit the first SRS through a first wireless communication module 421 in a time interval (e.g., the fourth slot #3) of a first SRS resource. Thereafter, the electronic device 101 may transmit the second SRS through the first wireless communication module 421 in a time interval (e.g., an eighth slot #7) of a second SRS resource. Thereafter, when a time interval (e.g., a slot #13) of a third SRS resource arrives or a fourth SRS resource (e.g., a slot #17) arrives, the electronic device 101 may switch an SRS port from the first wireless communication module 421 to the second wireless communication module 423 through control of a CP 440. In addition, during the switching, the electronic device 101 may switch an LTE transmission port from the second wireless communication module 423 to the first wireless communication module 421. After the SRS transmission is completed, the electronic device 101 may fall back to a default setting for transmission of an uplink signal (e.g., a physical uplink shared channel (PUSCH), or a physical uplink control channel (PUCCH)). The electronic device 101 may switch a NR transmission port from the second wireless communication module 423 to the first wireless communication module 421, and switch the LTE transmission port from the first wireless communication module 421 to the second wireless communication module 423.

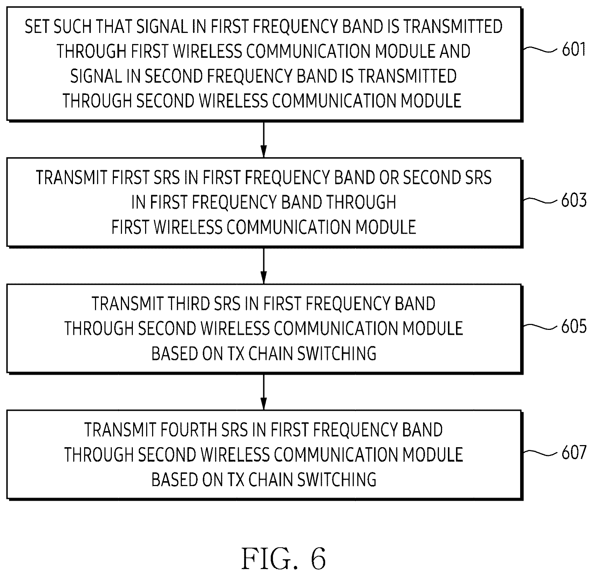

FIG. 6 illustrates an operation flow of an electronic device (e.g., the electronic device 101) for transmitting SRSs, based on a RFFE for TX chain switching, according to various embodiments. For example, four SRS resources may be included in the electronic device 101 for 1T4R. An uplink signal transmitted according to a first SRS resource among the SRS resources may be referred to as a first SRS. An uplink signal transmitted according to a second SRS resource among the SRS resources may be referred to as a second SRS. An uplink signal transmitted according to a third SRS resource among the SRS resources may be referred to as a third SRS. An uplink signal transmitted according to a fourth SRS resource among the SRS resources may be referred to as a fourth SRS.

Referring to FIG. 6, in operation 601, the electronic device 101 may set an RF transceiver (e.g., the RF transceiver 430) such that a signal in a first frequency band is transmitted through a first wireless communication module (e.g., the first wireless communication module 421) and a signal in a second frequency band is transmitted through a second wireless communication module (e.g., the second wireless communication module 423).

For example, the electronic device 101 may be connected to both a first base station for providing an LTE cell and a second base station for providing a NR cell. The electronic device 101 may access an access network in an EN-DC manner. The first base station may be a master node (MN), and the second base station may be a secondary node (SN). The first frequency band may include a frequency band of the NR cell, that is, an NR frequency band (e.g., N41). The second frequency band may include a frequency band of the LTE cell, that is, an LTE frequency band (e.g., B3). The electronic device 101 may set the RF transceiver 430 such that an up-converted NR SRS in the first frequency band is transmitted through the first wireless communication module 421. The electronic device 101 may set the RF transceiver 430 such that an up-converted LTE signal in the second frequency band is transmitted through the second wireless communication module 423.

For example, the electronic device 101 may access the access network on two cells through uplink (UL) carrier aggregation (CA). Among the two cells, a first cell may be a secondary cell (SCell) and a second cell may be a primary cell (PCell). Both the first frequency band of the first cell and the second frequency band of the second cell may support an NR communication system. As an example, the SRS resources for the 1T4R may be configured in the first cell. The electronic device 101 may set the RF transceiver 430 such that the NR SRS of the SCell is transmitted through the first wireless communication module 421. The electronic device 101 may set the RF transceiver 430 such that the uplink signal (e.g., PUSCH, or PUCCH) of the PCell is transmitted through the second wireless communication module 423.

In operation 603, the electronic device 101 may transmit the first SRS in the first frequency band or the second SRS in the first frequency band through the first wireless communication module 421. The electronic device 101 may convert a baseband signal (e.g., an SRS sequence) provided from a processor (e.g., the CP 440) into an RF signal through the RF transceiver 430. The electronic device 101 may transmit the first SRS converted into the RF signal through the first wireless communication module 421 and a first antenna (e.g., the first antenna 401). Thereafter, when a time interval of the second SRS resource arrives, the electronic device 101 may perform antenna switching. Herein, it should be noted that the antenna switching is distinguished from the TX chain switching to be described below. The electronic device 101 may change a transmission path for NR SRS transmission through the antenna switching. For example, the electronic device 101 may change a path from the first wireless communication module 421 to the first antenna 401 into a path from the first wireless communication module 421 to a second antenna (e.g., the second antenna 402). The electronic device 101 may transmit the second SRS converted into the RF signal through the first wireless communication module 421 and the second antenna 402.

In operation 605, the electronic device 101 may transmit the third SRS in the first frequency band through the second wireless communication module 423 based on the TX chain switching. When a time interval of the third SRS resource arrives, the electronic device 101 may perform the TX chain switching. The TX chain switching may include an operation of changing a transmission port (e.g., an SRS port) for the first frequency band from the first wireless communication module 421 to the second wireless communication module 423. In addition, the TX chain switching may include changing a transmission port for the second frequency band from the second wireless communication module 423 to the first wireless communication module 421.

The electronic device 101 may change the transmission path for the NR SRS transmission through the TX chain switching. The electronic device 101 may change the transmission path such that an SRS output signal from the RF transceiver 430 is provided to the second wireless communication module 423 rather than the first wireless communication module 421. The electronic device 101 may transmit the third SRS converted into the RF signal through the second wireless communication module 423 and a third antenna 403. Although not illustrated in FIG. 6, the electronic device 101 may transmit the signal in the second frequency band converted into the RF signal through the first wireless communication module 421 and the first antenna 401. The electronic device 101 may transmit the third SRS in the first frequency band while transmitting the signal in the second frequency band.

After transmitting the third SRS, the electronic device 101 may perform the TX chain switching again. The electronic device 101 may return to a setting before transmitting the third SRS. The re-performed TX chain switching may be referred to as fallback switching. The fallback switching may include an operation of changing a transmission port for SRS transmission from the second wireless communication module 423 to the first wireless communication module 421. In addition, the TX chain switching may include changing a transmission port for LTE transmission from the first wireless communication module 421 to the second wireless communication module 423.

In operation 607, the electronic device 101 may transmit the fourth SRS in the first frequency band through the second wireless communication module 423 based on the TX chain switching.

When a time interval of the fourth SRS resource arrives, the electronic device 101 may perform the TX chain switching. Herein, the TX chain switching may include an operation of changing the transmission port for the SRS transmission of the first frequency band from the first wireless communication module 421 to the second wireless communication module 423. In addition, the TX chain switching may include changing a transmission port for signal transmission (e.g., transmission of an LTE signal) of the second frequency band from the second wireless communication module 423 to the first wireless communication module 421.

Through the TX chain switching, the electronic device 101 may allocate a port for NR SRS transmission to the second wireless communication module 423. The electronic device 101 may use a transmission path from the second wireless communication module 423 to a fourth antenna (e.g., the second antenna 404) for the NR SRS transmission through the TX chain switching. The electronic device 101 may transmit the fourth SRS converted into the RF signal through the second wireless communication module 423 and the fourth antenna 404. Although not illustrated in FIG. 6, the electronic device 101 may transmit the signal in the second frequency band converted into the RF signal through the first wireless communication module 421 and the first antenna 401. The electronic device 101 may transmit the fourth SRS in the first frequency band while transmitting the signal in the second frequency band.

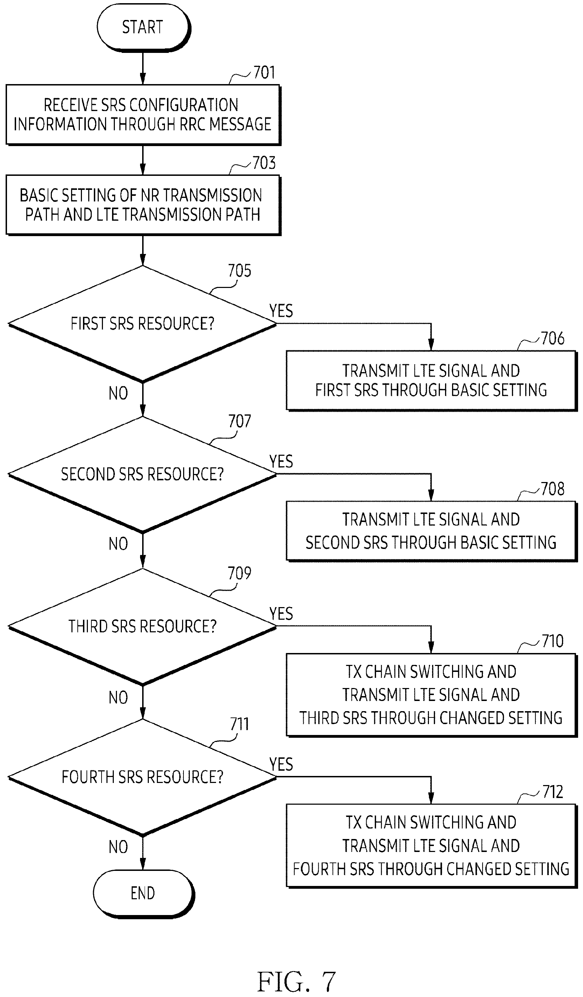

FIG. 7 illustrates an operation flow of an electronic device (e.g., the electronic device 101) for performing TX chain switching, according to various embodiments. In FIG. 7, an example of a condition for triggering the TX chain switching in a slot to which an SRS resource is allocated is described.

Referring to FIG. 7, in operation 701, the electronic device 101 may receive SRS configuration information through an RRC message. The SRS configuration information may include information for an SRS resource set for 1T4R. The information for the SRS resource set may include four SRS resources. The information for the SRS resource set may include usage information for the four SRS resources. For example, the usage information may indicate antenna switching. The four SRS resources for the 1T4R may be included in the electronic device 101. An uplink signal transmitted according to a first SRS resource among the SRS resources may be referred to as a first SRS. An uplink signal transmitted according to a second SRS resource among the SRS resources may be referred to as a second SRS. An uplink signal transmitted according to a third SRS resource among the SRS resources may be referred to as a third SRS. An uplink signal transmitted according to a fourth SRS resource among the SRS resources may be referred to as a fourth SRS.

Although not illustrated in FIG. 7, for the SRS configuration information, the electronic device 101 may transmit a UE capability message to a base station (e.g., the network node 301) before operation 701. The UE capability message may indicate whether the electronic device 101 supports the antenna switching, and may indicate a combination of the number of transmission antennas the number of reception antennas that the electronic device 101 may support (i.e., through how many antennas DL reception is available).

In operation 703, the electronic device 101 may perform a basic setting of an NR transmission path and an LTE transmission path. For example, the electronic device 101 may determine a first wireless communication module (e.g., the first wireless communication module 421) as an RFFE for the NR transmission path. The electronic device 101 may set a second wireless communication module (e.g., the second wireless communication module 423) as an RFFE for the LTE transmission path. The setting may be referred to as the basic setting.

In operation 705, the electronic device 101 may determine whether a transmission slot is included in a time interval corresponding to the first SRS resource. The transmission slot may mean a current transmission interval (e.g., a transmission time interval (TTI)) of the electronic device 101. That is, the electronic device 101 may determine whether a time-frequency resource indicated by information for the first SRS resource received in the operation 701 has currently arrived. In case that the transmission slot is included in the time interval (e.g., the fourth slot #3 of FIG. 5) corresponding to the first SRS resource, the electronic device 101 may perform operation 706. In case that the transmission slot is not the first SRS resource, the electronic device 101 may perform operation 707.

In the operation 706, the electronic device 101 may transmit an LTE signal and the first SRS through the basic setting. The electronic device 101 may transmit the first SRS in an NR frequency band through the first wireless communication module 421. The electronic device 101 may transmit a signal in an LTE frequency band through the second wireless communication module 423. The electronic device 101 may transmit the first SRS through a first antenna (e.g., the first antenna 401) while the LTE frequency band signal is transmitted.

In the operation 707, the electronic device 101 may determine whether the transmission slot is the second SRS resource. The electronic device 101 may determine whether a time-frequency resource indicated by information for the second SRS resource received in the operation 701 has currently arrived. When the transmission slot is included in a time interval (e.g., the eighth slot #7 of FIG. 5) corresponding to the second SRS resource, the electronic device 101 may perform operation 708. When the transmission slot is not the second SRS resource, the electronic device 101 may perform operation 709.

In the operation 708, the electronic device 101 may transmit the LTE signal and the second SRS through the basic setting. The electronic device 101 may transmit the second SRS in the NR frequency band through the first wireless communication module 421. The electronic device 101 may transmit the signal in the LTE frequency band through the second wireless communication module 423. The electronic device 101 may transmit the second SRS through a second antenna (e.g., the second antenna 402) while the LTE frequency band signal is transmitted.

In the operation 709, the electronic device 101 may determine whether the transmission slot is the third SRS resource. The electronic device 101 may determine whether a time-frequency resource indicated by information for the third SRS resource received in the operation 701 has currently arrived. When the transmission slot is included in a time interval (e.g., the fourteenth slot #13 of FIG. 5) corresponding to the third SRS resource, the electronic device 101 may perform operation 710. When the transmission slot is not the third SRS resource, the electronic device 101 may perform operation 711.

In the operation 710, the electronic device 101 may perform the TX chain switching and transmit the LTE signal and the third SRS through the changed setting. Since a wireless communication module (e.g., the second wireless communication module 423) for the LTE signal is shared for the third SRS, the electronic device 101 may perform the TX chain switching for transmission of the third SRS. The electronic device 101 may change an NR transmission port from the first wireless communication module 421 to the second wireless communication module 423 through the TX chain switching. The electronic device 101 may change an LTE transmission port from the second wireless communication module 423 to the first wireless communication module 421 through the TX chain switching. For example, through the TX chain switching, the electronic device 101 may determine the second wireless communication module 423 as the RFFE for the NR transmission path. The electronic device 101 may set the first wireless communication module 421 as the RFFE for the LTE transmission path. Setting of the transmission path may be changed.

The electronic device 101 may transmit the LTE signal and the third SRS based on the changed setting. The electronic device 101 may transmit the signal in the LTE frequency band through the first wireless communication module 421. The electronic device 101 may transmit the third SRS in the NR frequency band through the second wireless communication module 423. The electronic device 101 may transmit the third SRS through a third antenna (e.g., the third antenna 403) while the LTE frequency band signal is transmitted.

As described with reference to FIG. 7, the electronic device 101 may determine whether to perform the TX chain switching according to which SRS resource a time interval corresponds to. According to an embodiment, in case that SRS transmission related to the SRS resource is set to use the wireless communication module (e.g., the second wireless communication module 423) set to transmit the LTE signal in the time interval corresponding to the SRS resource, the electronic device 101 may perform the TX chain switching. The electronic device 101 may change not only the NR transmission path for the SRS transmission but also the LTE transmission path for the transmission of the LTE signal.

Although not illustrated in FIG. 7, after transmitting the third SRS, the electronic device 101 may fall back to the basic setting again. The electronic device 101 may transmit the LTE signal through the second wireless communication module 423.

In the operation 711, the electronic device 101 may determine whether the transmission slot is the fourth SRS resource. The electronic device 101 may determine whether a time-frequency resource indicated by information for the fourth SRS resource received in the operation 701 has currently arrived. In case that the transmission slot is included in a time interval (e.g., the eighteenth slot #17 of FIG. 5) corresponding to the fourth SRS resource, the electronic device 101 may perform operation 712. In case that the transmission slot is not the fourth SRS resource, the electronic device 101 may terminate a procedure of determining whether to transmit the SRS. Meanwhile, although the procedure has been described as being terminated in FIG. 7, the electronic device 101 may perform at least a portion of the operations of FIG. 7 again in case of receiving an additional DCI, or in case that periodic SRS resources are allocated.

In the operation 712, the electronic device 101 may perform the TX chain switching and transmit the LTE signal and the fourth SRS through the changed setting. Since the wireless communication module (e.g., the second wireless communication module 423) for the LTE signal is shared for the fourth SRS, the electronic device 101 may perform the TX chain switching for transmission of the fourth SRS. The electronic device 101 may change the NR transmission port from the first wireless communication module 421 to the second wireless communication module 423 through the TX chain switching. The electronic device 101 may change the LTE transmission port from the second wireless communication module 423 to the first wireless communication module 421 through the TX chain switching. The electronic device 101 may transmit the signal in the LTE frequency band through the first wireless communication module 421. The electronic device 101 may transmit the fourth SRS in the NR frequency band through the second wireless communication module 423. The electronic device 101 may transmit the fourth SRS through a fourth antenna (e.g., the fourth antenna 404) while the LTE frequency band signal is transmitted.

Hereinafter, in various embodiments of the present disclosure, EN-DC is described as an example as a technology for providing both an LTE carrier and an NR carrier, but embodiments of the present disclosure are not limited thereto. According to an embodiment, the RFFE structure described in FIG. 4 and the operations of FIGS. 6 to 7 may be applied to another type of DC (e.g., New radio-Evolved universal terrestrial radio access dual-connectivity (NE-DC), NG-RAN Evolved universal terrestrial radio access-New radio dual-connectivity (NGEN-DC)) in addition to the EN-DC. Additionally, the operations described in FIG. 7 may be performed even when the electronic device 101 in which UL CA is configured on different frequency bands, performs SRS antenna switching for 1T4R in PCell or SCell. In this case, the LTE signal in FIG. 7 may be replaced with a signal in a frequency band different from the frequency band to which an SRS is transmitted.

Transmission antenna switching technology for an SRS may improve downlink reception performance of a terminal. In order to implement the transmission antenna switching technology in the EN-DC, if all antennas for SRS transmission are electrically connected to one communication module, an RFFE circuit configuration of the electronic device 101 may be complicated. In addition, RF insertion loss may increase according to hardware switches for path branching. Therefore, in the present disclosure, the RF insertion loss may be reduced and current consumption to a required output power may be reduced through an RFFE that distributes antennas for SRS transmission to a plurality of communication modules rather than one communication module. Since the decrease in the power consumption reduces an amount of heat generated, loss of a component in the electronic device 101 decreases. In addition, since a component such as a switch or a diplexer is not be included, spatial efficiency within the electronic device 101 may be increased.

In embodiments, an electronic device 101 may comprise a first antenna 401, a second antenna 402, a third antenna 403, a fourth antenna 404, a first wireless communication module 421 electrically connected to the first antenna 401 and the second antenna 402, a second wireless communication module 423 electrically connected to the third antenna 403 and the fourth antenna 404, a radio frequency (RF) transceiver 430 electrically connected to the first wireless communication module 421 and the second wireless communication module 423, and a processor 120, or 440. The processor 120, or 440 may be configured to set the RF transceiver 430 such that a signal in a first frequency band is transmitted through the first wireless communication module 421 and a signal in a second frequency band is transmitted through the second wireless communication module 423. The processor 120, or 440 may be configured to transmit, through the first wireless communication module 421, a first sounding reference signal (SRS) of the first frequency band or a second SRS of the first frequency band. The processor 120, or 440 may be configured to transmit a third SRS of the first frequency band through the second wireless communication module 423 based on transmit (TX) chain switching during a time interval allocated for transmitting the third SRS. The processor 120, or 440 may be configured to transmit a fourth SRS of the first frequency band through the second wireless communication module 423 based on TX chain switching during a time interval allocated for transmitting the fourth SRS.

According to an embodiment, the processor 120, or 440 may be configured to receive, from a network node 301 via a radio resource control (RRC) message, SRS configuration information. The SRS configuration information may include information regarding SRS resources for 1T4R in a new radio (NR) communication system and usage information for the SRS resources. The usage information may indicate antenna switching. The SRS resources may include a first SRS resource for the first SRS, a second SRS resource for the second SRS, a third SRS resource for the third SRS, and a fourth SRS resource for the fourth SRS.

According to an embodiment, the processor 120, or 440 may be configured to receive, from the network node 301, downlink control information (DCI). The DCI may include information for requesting transmission of the first SRS, the second SRS, the third SRS, and the fourth SRS.

According to an embodiment, the processor 120, or 440 may be configured to, while transmitting the third SRS through the RF transceiver 430, the second wireless communication module 423, and the third antenna 403, transmit the signal in the second frequency band through the RF transceiver 430, the first wireless communication module 421, and the first antenna 401. The processor 120, or 440 may be configured to, while transmitting the fourth SRS through the RF transceiver 430, the second wireless communication module 423, and the fourth antenna 404, transmit the signal in the second frequency band through the RF transceiver 430, the first wireless communication module 421, and the first antenna 401.

According to an embodiment, the processor 120, or 440 may be configured to, while transmitting the first SRS through the RF transceiver 430, the first wireless communication module 421, and the first antenna 401, transmit the signal in the second frequency band through the RF transceiver 430, the second wireless communication module 423, and the third antenna 403. The processor 120, or 440 may be configured to, while transmitting the second SRS through the RF transceiver 430, the first wireless communication module 421, and the second antenna 402, transmit the signal in the second frequency band through the RF transceiver 430, the second wireless communication module 423, and the third antenna 403.

According to an embodiment, the TX chain switching may include path changing to transmit the signal in the first frequency band through the second wireless communication module 423 and to transmit the signal in the second frequency band through the first wireless communication module 421.

According to an embodiment, the processor 120, or 440 may be configured to, after transmitting the third SRS and before transmitting the fourth SRS, transmit the signal in the second frequency band through the second wireless communication module 423 by performing fallback switching. The processor 120, or 440 may be configured to, after transmitting the fourth SRS, transmit the signal in the second frequency band through the second wireless communication module 423 by performing the fallback switching.

According to an embodiment, each of the first wireless communication module 421 and the second wireless communication module 423 may comprise a power amplifier module including duplexer (PMAID) or a low noise amplifier power amplifier module including duplexer (LPAMID) for the first frequency band and the second frequency band.

According to an embodiment, the signal in the first frequency band may be associated with a new radio (NR) communication system. The signal in the second frequency band may be associated with a long term evolution (LTE) communication system. The electronic device 101 may be configured with E-UTRA NR dual connectivity (EN-DC).

According to an embodiment, the first frequency band may correspond to a secondary cell (SCell) in uplink (UL) carrier aggregation (CA) of a new radio (NR) communication system. The second frequency band may correspond to a primary cell (PCell) in the UL CA.

In embodiments, a method performed by an electronic device 101 may comprise setting the electronic device 101 such that a signal in a first frequency band is transmitted through a first wireless communication module 421 that is electrically connected to a first antenna 401 and a second antenna 402, and a signal in a second frequency band is transmitted through a second wireless communication module 423 that is electrically connected to a third antenna 403 and a fourth antenna 404. The method may comprise transmitting, through the first wireless communication module 421, a first sounding reference signal (SRS) of the first frequency band or a second SRS of the first frequency band. The method may comprise, during a time interval for transmitting a third SRS of the first frequency band, transmitting the third SRS of the first frequency band through the second wireless communication module 423, based on transmit (TX) chain switching. The method may comprise, during a time interval for transmitting a fourth SRS of the first frequency band, transmitting the fourth SRS of the first frequency band through the second wireless communication module 423, based on TX chain switching.

According to an embodiment, the method may comprise receiving, from a network node 301 via a radio resource control (RRC) message, SRS configuration information. The SRS configuration information may include information regarding SRS resources for 1T4R in a new radio (NR) communication system and usage information for the SRS resources. The usage information may indicate antenna switching. The SRS resources may include a first SRS resource for the first SRS, a second SRS resource for the second SRS, a third SRS resource for the third SRS, and a fourth SRS resource for the fourth SRS.

According to an embodiment, the method may comprise receiving, from the network node 301, downlink control information (DCI). The DCI may include information for requesting transmission of the first SRS, the second SRS, the third SRS, and the fourth SRS.

According to an embodiment, the method may comprise, while transmitting the third SRS through the second wireless communication module 423 and the third antenna 403, transmitting the signal in the second frequency band through the first wireless communication module 421 and the first antenna 401. The method may comprise, while transmitting the fourth SRS through the second wireless communication module 423 and the fourth antenna 404, transmitting the signal in the second frequency band through the first wireless communication module 421 and the first antenna 401.

According to an embodiment, the method may comprise, while transmitting the first SRS through the first wireless communication module 421 and the first antenna 401, transmitting the signal in the first frequency band through the second wireless communication module 423 and the third antenna 403. The method may comprise, while transmitting the second SRS through the first wireless communication module 421 and the second antenna 402, transmitting the signal in the first frequency band through the second wireless communication module 423 and the third antenna 403.

According to an embodiment, the TX chain switching may include path changing to transmit the signal in the first frequency band through the second wireless communication module 423 and to transmit the signal in the second frequency band through the first wireless communication module 421.

According to an embodiment, the method may comprise, after transmitting the third SRS and before transmitting the fourth SRS, transmitting the signal in the second frequency band through the second wireless communication module 423 by performing fallback switching. The method may further comprise, after transmitting the fourth SRS, transmitting the signal in the second frequency band through the second wireless communication module 423 by performing the fallback switching.

According to an embodiment, each of the first wireless communication module 421 and the second wireless communication module 423 may comprise a power amplifier module including duplexer (PMAID) or a low noise amplifier power amplifier module including duplexer (LPAMID) for the first frequency band and the second frequency band.

According to an embodiment, the signal in the first frequency band may be associated with a new radio (NR) communication system. The signal in the second frequency band may be associated with a long term evolution (LTE) communication system. The electronic device 101 may be configured with E-UTRA NR dual connectivity (EN-DC).

According to an embodiment, the first frequency band may correspond to a secondary cell (SCell) in uplink (UL) carrier aggregation (CA) of a new radio (NR) communication system. The second frequency band may correspond to a primary cell (PCell) in the UL CA.

In embodiments, a non-transitory computer-readable storage medium is provided. The non-transitory computer-readable storage medium may comprise memory storing instructions. The instructions, when executed by a processor, cause an electronic device 101 to set the electronic device 101 such that a signal in a first frequency band is transmitted through a first wireless communication module 421 that is electrically connected to a first antenna 401 and a second antenna 402, and a signal in a second frequency band is transmitted through a second wireless communication module 423 that is electrically connected to a third antenna 403 and a fourth antenna 404, transmit, through the first wireless communication module 421, a first sounding reference signal (SRS) of the first frequency band or a second SRS of the first frequency band, during a time interval for transmitting a third SRS of the first frequency band, transmit the third SRS of the first frequency band through the second wireless communication module 423, based on transmit (TX) chain switching, and, during a time interval for transmitting a fourth SRS of the first frequency band, transmit the fourth SRS of the first frequency band through the second wireless communication module 423, based on TX chain switching.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), an optical storage device (digital versatile discs (DVDs) or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

1. An electronic device (101), comprising:
a first antenna (401);
a second antenna (402);
a third antenna (403);
a fourth antenna (404);
a first wireless communication module (421) electrically connected to the first antenna (401) and the second antenna (402);
a second wireless communication module (423) electrically connected to the third antenna (403) and the fourth antenna (404);
a radio frequency (RF) transceiver (430) electrically connected to the first wireless communication module (421) and the second wireless communication module (423); and
a processor (120, 440),
wherein the processor (120, 440) is configured to:
set the RF transceiver (430) such that a signal in a first frequency band is transmitted through the first wireless communication module (421) and a signal in a second frequency band is transmitted through the second wireless communication module (423);
transmit, through the first wireless communication module (421), a first sounding reference signal (SRS) of the first frequency band or a second SRS of the first frequency band;
transmit a third SRS of the first frequency band through the second wireless communication module (423) based on transmit (TX) chain switching during a time interval allocated for transmitting the third SRS; and
transmit a fourth SRS of the first frequency band through the second wireless communication module (423) based on TX chain switching during a time interval allocated for transmitting the fourth SRS.

2. The electronic device (101) of claim 1,
wherein the processor (120, 440) is further configured to:
receive, from a network node (301) via a radio resource control (RRC) message, SRS configuration information,
wherein the SRS configuration information includes information regarding SRS resources for 1T4R in a new radio (NR) communication system and usage information for the SRS resources,
wherein the usage information indicates antenna switching, and
wherein the SRS resources include a first SRS resource for the first SRS, a second SRS resource for the second SRS, a third SRS resource for the third SRS, and a fourth SRS resource for the fourth SRS.

3. The electronic device (101) of claims 1 to 2,
wherein the processor (120, 440) is further configured to:
receive, from the network node (301), downlink control information (DCI),
wherein the DCI includes information for requesting transmission of the first SRS, the second SRS, the third SRS, and the fourth SRS.

4. The electronic device (101) of claims 1 to 3,
wherein the processor (120, 440) is further configured to:
while transmitting the third SRS through the RF transceiver (430), the second wireless communication module (423), and the third antenna (403), transmit the signal in the second frequency band through the RF transceiver (430), the first wireless communication module (421), and the first antenna (401); and
while transmitting the fourth SRS through the RF transceiver (430), the second wireless communication module (423), and the fourth antenna (404), transmit the signal in the second frequency band through the RF transceiver (430), the first wireless communication module (421), and the first antenna (401).

5. The electronic device (101) of claims 1 to 4,
wherein the processor (120, 440) is further configured to:
while transmitting the first SRS through the RF transceiver (430), the first wireless communication module (421), and the first antenna (401), transmit the signal in the second frequency band through the RF transceiver (430), the second wireless communication module (423), and the third antenna (403), and
while transmitting the second SRS through the RF transceiver (430), the first wireless communication module (421), and the second antenna (402), transmit the signal in the second frequency band through the RF transceiver (430), the second wireless communication module (423), and the third antenna (403).

6. The electronic device (101) of claims 1 to 5,
wherein the TX chain switching includes path changing for the RF transceiver (430) to transmit the signal in the first frequency band through the second wireless communication module (423) and to transmit the signal in the second frequency band through the first wireless communication module (421).

7. The electronic device (101) of claims 1 to 6,
wherein the processor (120, 440) is further configured to:
after transmitting the third SRS and before transmitting the fourth SRS, transmit the signal in the second frequency band through the second wireless communication module (423) by performing fallback switching, and
after transmitting the fourth SRS, transmit the signal in the second frequency band through the second wireless communication module (423) by performing the fallback switching.

8. The electronic device (101) of claims 1 to 7,
wherein each of the first wireless communication module (421) and the second wireless communication module (423) comprises a power amplifier module including duplexer (PMAID) or a low noise amplifier power amplifier module including duplexer (LPAMID) for the first frequency band and the second frequency band.

9. The electronic device (101) of claims 1 to 8,
wherein the signal in the first frequency band is associated with a new radio (NR) communication system,
wherein the signal in the second frequency band is associated with a long term evolution (LTE) communication system, and
wherein the electronic device (101) is configured with evolved universal mobile telecommunication system (UMTS) Terrestrial radio access network (E-UTRA) NR dual connectivity (EN-DC.

10. The electronic device (101) of claims 1 to 9,
wherein the first frequency band corresponds to a secondary cell (SCell) in uplink (UL) carrier aggregation (CA) of a new radio (NR) communication system, and
wherein the second frequency band corresponds to a primary cell (PCell) in the UL CA.

11. A method performed by an electronic device (101), the method comprising:
setting the electronic device (101) such that a signal in a first frequency band is transmitted through a first wireless communication module (421) that is electrically connected to a first antenna (401) and a second antenna (402), and a signal in a second frequency band is transmitted through a second wireless communication module (423) that is electrically connected to a third antenna (403) and a fourth antenna (404);
transmitting, through the first wireless communication module (421), a first sounding reference signal (SRS) of the first frequency band or a second SRS of the first frequency band;
during a time interval for transmitting a third SRS of the first frequency band, transmitting the third SRS of the first frequency band through the second wireless communication module (423), based on transmit (TX) chain switching; and
during a time interval for transmitting a fourth SRS of the first frequency band, transmitting the fourth SRS of the first frequency band through the second wireless communication module (423), based on TX chain switching.

12. The method of claim 11, further comprising:
receiving, from a network node (301) via a radio resource control (RRC) message, SRS configuration information,
wherein the SRS configuration information includes information regarding SRS resources for 1T4R in a new radio (NR) communication system and usage information for the SRS resources,
wherein the usage information indicates antenna switching, and
wherein the SRS resources include a first SRS resource for the first SRS, a second SRS resource for the second SRS, a third SRS resource for the third SRS, and a fourth SRS resource for the fourth SRS.

13. The method of claims 11 to 12, further comprising:
receiving, from the network node (301), downlink control information (DCI),
wherein the DCI includes information for requesting transmission of the first SRS, the second SRS, the third SRS, and the fourth SRS.

14. The method of claims 11 to 13, further comprising:
while transmitting the third SRS through the second wireless communication module (423) and the third antenna (403), transmitting the signal in the second frequency band through the first wireless communication module (421) and the first antenna (401); and
while transmitting the fourth SRS through the second wireless communication module (423) and the fourth antenna (404), transmitting the signal in the second frequency band through the first wireless communication module (421) and the first antenna (401).

15. A non-transitory computer-readable storage medium, comprising:
memory storing instructions which, when executed by a processor, cause an electronic device (101) to:
set the electronic device (101) such that a signal in a first frequency band is transmitted through a first wireless communication module (421) that is electrically connected to a first antenna (401) and a second antenna (402), and a signal in a second frequency band is transmitted through a second wireless communication module (423) that is electrically connected to a third antenna (403) and a fourth antenna (404);
transmit, through the first wireless communication module (421), a first sounding reference signal (SRS) of the first frequency band or a second SRS of the first frequency band;
during a time interval for transmitting a third SRS of the first frequency band, transmit the third SRS of the first frequency band through the second wireless communication module (423), based on transmit (TX) chain switching; and
during a time interval for transmitting a fourth SRS of the first frequency band, transmit the fourth SRS of the first frequency band through the second wireless communication module (423), based on TX chain switching.
